# EUROPEAN PATENT APPLICATION

(11) **EP 4 817 842 A1**
(43) Date of publication of application: **07.10.2026**
(21) Application number: 26166606.9
(22) Date of filing: 23.03.2026
(51) Int. Cl.: B29C 45/76, B22D 17/32

(54) **DETECTION APPARATUS AND MOLD INCLUDING THE DETECTION APPARATUS**

(30) Priority: 01.04.2025 IT 202500006924
(71) Applicant: Azzurrodigitale Machine Integration S.r.l., 35129 Padova (PD) (IT)
(72) Inventor: BARBETTA, Marco, 35129 PADOVA (IT); LA GRASSA, Marco, 35129 PADOVA (PD) (IT); PISTORELLO, Riccardo, 35129 PADOVA (PD) (IT)
(74) Representative: De Filippis, Sara

(57) **Abstract**

Detection apparatus for molds, including:
- at least one process sensor (3) configured to acquire data from a mold;
- at least one transducer (5) connected to the process sensor (3), configured to:
∘ receive data from the process sensor (3),
∘ process data to extract parameters,
∘ wirelessly transmit the extracted parameters;

- a remote control and management unit (12) configured to receive the parameters transmitted wirelessly.

## Description

### Field of invention

The present invention refers to the field of printing equipment, and more specifically to a detection apparatus for a mold, and to a mold for injection molding of plastic materials or die-casting or for similar processes.

### State of the art

Plastic injection molding is a process that is widely used in the manufacturing industry for the production of plastic components. This process requires precise control of several parameters, such as pressure and temperature, within the mold to ensure the quality of the final product and the reliability of the process itself. Traditionally, the sensors used to monitor these parameters are installed inside the mold and connected to external data acquisition systems via cables.

The use of cables to connect sensors presents several challenges. Firstly, cables that are moving continuously during the stamping cycle are subjectto wear and tear and can introduce noise into the signal, compromising the accuracy of measurements. In addition, the presence of cables makes mold construction and maintenance more complex, increasing downtime and operating costs. Finally, the use of cables limits the applicability of these monitoring systems in more advanced mold setups, such as rotary molds used for multi-color co-injection.

A further problematic aspect concerns the installation of data acquisition units. When placed on the press, they require cables to be routed between the press and the mold, increasing the complexity of the system. On the other hand, installing the control unit directly on the mold does not completely eliminate the need for moving cables, especially when both parts of the mold need to be monitored.

It has been understood that a system is needed that overcomes one or more of these problems.

The state of the art also includes the documents WO2019/197970 and "Design of intelligent manufacturing loT sensing system for polymer process monitoring" by Wang et al.

### Purpose of the invention

The purpose of the present invention is to provide a control apparatus and a mold that will allow to overcome the aforementioned drawbacks and in particular to reduce maintenance.

Another purpose of the present invention is to propose a mold that can be effectively controlled and/or monitored remotely and/or on the move.

Another purpose of the present invention is to propose a mold that can carry out complex operations.

Another purpose of the present invention is to propose a control apparatus that can operate for long periods.

Another purpose of the present invention is to propose a detection apparatus that uses limited amounts of energy.

### Object of the invention

Therefore, a detection apparatus as described in claim 1 is the object of the invention.

In a first embodiment, the detection apparatus 1 includes:
- at least one process sensor 3 configured to acquire data from a mold;
- at least one wireless transducer 5 connected to process sensor 3 and configured to be associated with a mold,
the equipment being configured to perform at least one of the following operations:
∘ receive data from the process sensor 3;
∘ process data to extract parameters;
∘ transmit the extracted parameters wirelessly; and comprises a remote control and management unit 12 configured to receive wireless transmitted parameters.

This eliminates the use of moving cables, reducing noise in the signal and simplifying the construction and maintenance of the detection apparatus and the mold in general. In addition, it allows remote monitoring of the printing process without the need for pre-arranged connections such as Wi-Fi, ethernet or other. The detection apparatus can also include a gateway device 2 configured to receive the parameters extracted from the wireless transducer 5 and transmit them to the remote control and management unit 12.

The addition of the gateway device reduces costs when multiple transducers are used, centralizing long-range communication.

Advantageously, in the event that there is only one transducer 5, the same enclosure can contain both the transducer and the gateway device 2. In a embodiment that includes a plurality of transducers, each can include a corresponding envelope.

The gateway device 2 can include a PAN interface 11 to communicate with the wireless transducer 5 and an LPWAN interface 10 to communicate with the remote control and management unit 12.

This configuration optimizes energy efficiency, using short-range protocols for local communication and long-range protocols for transmission to the remote control and management unit 12 which is generally outside the range of short-range protocols - i.e. it may be located in another building or in another country.

The wireless transducer5 can include a signal amplifier 6 and a logic unit 7 for data processing in order to obtain parameters.

This structure allows for local data processing, reducing the amount of data and/or parameters to be transmitted and extending battery life.

Process sensor 3 can include one or more of the following:
- pressure sensors,
- temperature sensors,
- flow sensors,
- vibration sensors.

This variety of 3 sensors allows for comprehensive monitoring of critical parameters of the molding process.

Data processing may include the calculation of parameters selected from the group including peak, rise time, hold time, and descent time for pressure or temperature data. Advantageously, the wireless transducer can be configured to allow a modification of the algorithms used for parameter extraction. Conveniently this can be done remotely by means of a command sent from the central control and processing unit 12, as will be clear later.

Extraction of these specific characteristics allows for accurate process evaluation with minimal data and/or parameters transmitted.

The apparatus can be configured to be used with a mold comprising a 1" moving part and a 1" fixed part.

This configuration makes the tool suitable for use with standard plastic injection or die-casting molds.

The gateway device 2 can be configured to be mounted on the 1" moving part or on the fixed 1" part of the mold.

This mounting flexibility allows positioning to be optimized according to the specific needs of the mold and process.

The Wireless Transducer 5 can be battery-powered, and the battery can be configured to allow the wireless transducer 5 to operate for at least two years without battery replacement.

This long battery life significantly reduces the need for maintenance and downtime. The remote control and management unit 12 can be configured to monitor the quality of the molding process and for example can interrupt the process or send an alert to a user if the parameters received are outside a predetermined range. The control and management unit 12 can also be configured to use the data to run predictive analytics models.

This automatic monitoring and control functionality improves product quality and prevents mold damage due to abnormal process conditions.

### Brief description of the figures

The present invention will now be described, by way of example and not limitation, according to some of its preferred forms of realization, and with the help of the attached figures, in which:

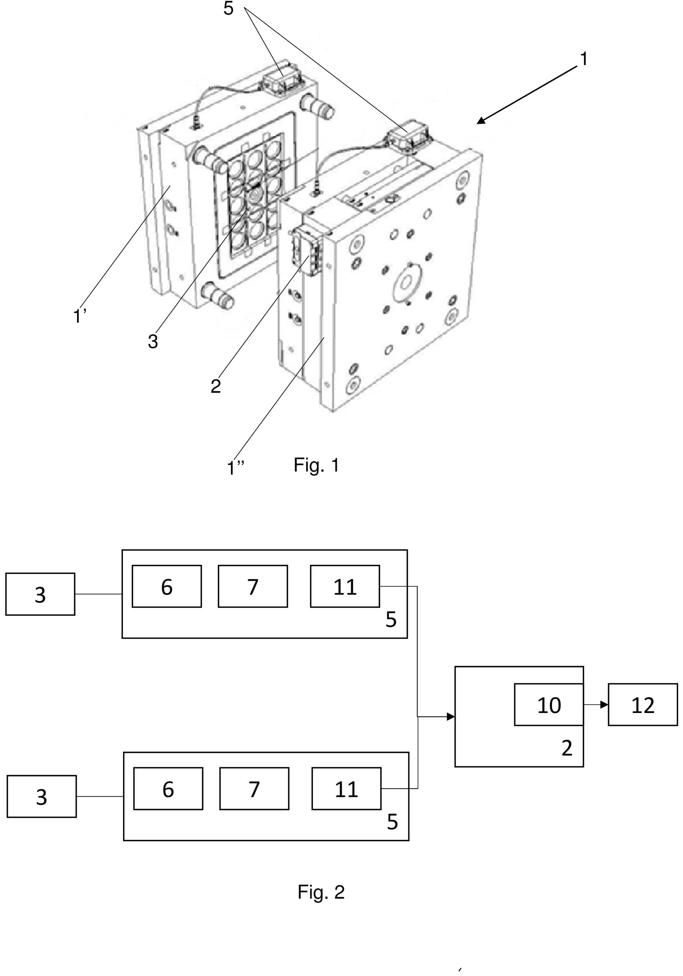

Fig. 1 illustrates a diagram of the process monitoring system, according to an aspect of the present invention.
Fig. 2 shows a block diagram of the components of the control apparatus, in accordance with an example implementation.

The printing apparatus comprises several main components that work together to capture and transmit data from the molding process.

In particular, the apparatus is configured to be used in combination with a mold 1, which will be described first for clarity.

A mold 1 forms the basis of the apparatus and includesa moving part 1' and a fixed part 1". These parts of the mold form the cavity into which the material is injected during the molding process.

A gateway device 2 can be installed on the moving part 1' or on the fixed part 1" of the mold. This gateway device 2 plays an important role in the collection and transmission of data and/or parameters, but it is not essential, particularlywhen only one signal transducer is used 5. In particular, if there is only one signal transducer 5, the gateway device 2 can basically be included in the transducer 5. Advantageously, the transducer 5 can be positioned on the fixed 1" or mobile 1' part of the mold 1. Similarly, the gateway device can be positioned on the fixed 1" or mobile 1' part of mold 1. In particular, therefore, the gateway device 2 and the transducer5 can be positioned on the same part 1', 1" of the mold, and be connected via wireless and/or cable, or they can be positioned on different parts of mold 1 and be connected wirelessly.

The apparatus also includes one or more process sensors 3 configured to measure different data related to the mold and/or the molding process during the molding cycle, which are preferably installed in the mold. These process sensors 3 convert physical quantities into electrical signals.

The apparatus also includes a signal transducer 5 configured to receive the measured data from the sensors 3. Each transducer 5 can be connected via cable to one or more process sensors 3. The signal transducer5 processes the data from the process sensors3, extracts mold and/or process parameters and prepares them for wireless transmission.

This configuration of components allows the printing apparatus to capture critical parameters from the molding process and efficiently transmit them for remote monitoring and control.

A process sensor 3 is configured to detect one or more physical quantities or operating data of the mold. Examples of physical quantities that can be detected by process sensor 3 include pressure, temperature, force, displacement, vibration, or other process variables relevantto mold monitoring. Process sensor 3 converts the measured physical quantity into an electrical signal.

A signal amplifier 4 is coupled to process sensor 3 to amplify the electrical signal generated by the sensor. The signal amplifier 4 can be configured to provide appropriate gain and condition the signal for later processing.

A signal transducer 5 receives the amplified signal from the signal amplifier 4 and processes it further. The signal transducer 5 can have inputs to receive signals from more than one process sensor 3, allowing the processing of data from multiple measurement points of the mold and/or relating to different physical quantities. The signal transducer 5 performs a feature extraction operation on the received signal. This reduces the amount of information that needs to be sentto the cloud by extracting only the most relevant parameters from the original signal. For example, for a pressure signal, signal transducer 5 can extract parameters such as peak value, rise time, hold time, and descent time, significantly reducing the amount of data to be transmitted compared to sending the entire sampled signal. In particular, the data can be sent either on a periodic basis or immediately upon the occurrence of predetermined conditions on the measured signals.

In particular, for example, transducer5 and/or gateway device 2 can be configured to perform the following analyses in orderto extract the parameters to be sent from the data detected by sensors 3:
- Cavity pressure: A molding cycle lasts up to 100 seconds. Typically, pressure is sampled at a frequency >20Hz, which causes 2000 samples to be acquired. However, in order to decide if the process is within the parameters, it is sufficient to know the peak, the rise time, the hold time (= persistence at more than 90% of the peak) and the descent time. The transducer then estimates these four features from the quantities measured by a pressure sensor and sends four samples, discarding the live data.
- Cavity temperature: A molding cycle lasts up to 100 seconds. Typically, pressure is sampled at a frequency >20Hz, which causes 2000 samples to be acquired. However, in order to decide if the process is within the parameters, it is sufficient to know the peak, the time of rise, hold (= persistence at more than 90% of the peak) and descent. The system, therefore, estimates these four characteristics starting from the quantities measured by a temperature sensor placed inside the molding chamber and sends four samples, discarding the data acquired live.
- Cooling Channel Outlet Temperature: A molding cycle lasts up to 100 seconds. Typically, pressure is sampled at a frequency >20Hz, which causes 2000 samples to be acquired. However, in orderto decide whether the cooling channel is removing heat, it is sufficientto know the maximum, minimum, variance, and average temperature value. If the variance is large enough, then the temperature fluctuates with the molding cycle and then the channel extracts heat from the cavities. If it does not oscillate, it means that the channel does not receive heat from the molten plastic cooling in the cavities. The system then estimates these two features from the quantities measured by a temperature sensor positioned at the cooling channel and sendsfoursamples, discarding the data acquired live.

This data reduction through feature extraction reduces system power consumption, extending battery life and optimizing the use of available bandwidth for wireless transmission.

In one embodiment, the transducer may comprise an LPWAN-type wireless interface, configured to send the processed information to a remote control and processing unit 12. In an alternative embodiment, thetransducer5 wireless interface 11 can be of the PAN type, configured to send the processed parameters to a gateway device positioned in the vicinity, as will be clear later.

A gateway device 2 can be included in the printing apparatus, and preferably attached to one of the two parts 1', 1" of mold 1. Gateway device 2 includes an LPWAN interface 10 configured to allow the data detected by sensors 3 and processed by transducer5 to be sentto a remote control and management unit 12, and a PAN interface 11 configured to allow the reception of the parameters processed by transducers 5.

The gateway device 2 is able to acquire additional information in addition to the data from the sensors 3 and/or the parameters from the transducers 5. This additional information may include mold operating parameters or environmental data.

The gateway 2 can aggregate data from multiple sensors in the mold. Data aggregation allows you to get an overview of the molding process.

The gateway device 2 can trigger data and/or parameter acquisition under certain conditions. These conditions can include mold operation, the presence of alarms, or the detection of abnormal conditions in the molding process.

The gateway device 2 can also establish a keepalive protocol with devices 5 to ensure that they are all operational and that none have been removed or deactivated.

When installed on the moving part of the mold, the gateway device 2 can measure the dynamics of the mold using an accelerometer. This functionality allows you to monitor the movements and vibrations of the moving part during the molding cycle and/or even simply to count the shots. In addition, the gateway device 2 can command the transducers 5 to acquire data only while the die is running, further saving energy.

The PAN 11 interface allows the gateway device 2 to communicate with the transducers 5 and/or sensors 3 present in the mold through a local wireless network. The LPWAN 10 interface, on the other hand, allows the transmission of processed data to a remote control unit 12, such as a cloud system.

The wireless communication system of the printing equipment includes a PAN (Personal Area Network) interface 11 and an LPWAN (Low Power Wide Area Network) interface 10.

A PAN 11 interface enables short-range communication between the components of the printing equipment. The PAN 11 interface can use technologies such as Bluetooth, Thread, or LoRa to transmit data from signal transducers to the gateway device. This short-range communication reduces power consumption and minimizes interference.

An LPWAN 10 interface is used for long-range data transmission from gateway device 2 or a transducer 5 to the remote control and management unit. The LPWAN 10 interface enables energy-efficient communication over long distances, eliminating the need for dedicated local network connections.

The signal transducer 5 processes the data acquired by the sensors and extracts the relevant parameters. These parameters are then sent to gateway device 2 via the PAN 11 interface. The gateway device 2 aggregates data from multiple transducers and transmits it to the remote control unit using the LPWAN 10 interface.

When the gateway device 2 is installed on the moving part of the mold, signal transducer 5 can be connected to the gateway device 2 by cable. This wired connection can offer transmission reliability benefits while maintaining the benefits of wireless communication for long-range transmission.

The combined use of the PAN 11 and LPWAN 10 interfaces allows to optimize energy efficiency and the range of communication, allowing remote monitoring of the printing process without the need to set up dedicated network infrastructures. The printing apparatus includes a remote control and management unit 12. The remote control and management unit12 receives the parameters transmitted by the mold monitoring apparatus via the LPWAN connection.

The remote control and managementunit 12 processes the received data to monitor the operation of the mold and the molding process. Processing can include analyzing parameters extracted from sensor signals, such as pressure spikes, rise and fall times, average temperatures, and variances.

The remote control and management unit 12 can be deployed as a cloud-based system, allowing remote data access and process control from any location with an internet connection. This allows the mold and molding process to be monitored without the need for a dedicated local network connection at the production site. The remote control and management unit 12 can run advanced analysis algorithms on the received data to detect anomalies, predict potential problems, and optimize process parameters. It can also generate alerts or alarms when the monitored parameters go out of acceptable ranges.

In addition, the remote control and managementunit 12 can provide a user interface to view real-time data, generate reports, and remotely control certain aspects of the molding process, if supported by the system.

The remote control and management unit 12 can also store historical data for long-term analysis, trend tracking, and continuous process improvement.

The printing process monitoring and control system is made up of several components that interact with each other to provide accurate, real-time analysis.

The process begins with a process sensor 3 that acquires data and/or information corresponding to physical quantities from mold 1. This data is then sent to signal transducer 5 for processing. In particular, initially the signal amplifier 6 amplifies them. Next, a logic unit 7 converts the amplified signal and processes it using predefined algorithms to extract parameters. This feature extraction significantly reduces the amountof data to be transmitted, helping to extend the system's battery life to over 2 years.

For example, for cavity pressure monitoring, the signal transducer 5 extracts parameters such as peak pressure, rise time, hold time, and descenttime, reducing thousands of samples to just four representative values. A similar approach is applied for cavity temperature. For the cooling channel outlet temperature, the variance and average are calculated to determine the effectiveness of heat extraction.

In one embodiment form the processed parameters are then sent to a gateway 2 device via a PAN 11 interface, using low-power protocols such as Bluetooth or LoRa. The gateway 2 device can be installed on the moving part 1" or on the fixed part 1' of the mold, and can aggregate data from multiple sensors.

In a further form of non-represented implementation, the transducer can include an LPWAN interface and be configured to send the processed parameters directly to the remote control and processing unit 12.

The gateway device 2 can be configured to perform further processing on the received parameters. Subsequently, the parameters are transmitted to a remote control and management unit 12, typically cloud-based, via an LPWAN interface 10. This long-range, low-power connection enables remote monitoring without the need for local network infrastructure.

The remote control and management unit 12 receives parameters and can analyze them to assess the quality of the printing process, identify potential problems, and provide real-time feedback. This approach allows continuous monitoring and effective control of the printing process, with the possibility of timely intervention in the event of anomalies.

The system offers several benefits, including the elimination of noise due to cable movement, the ability to mountsensors on differentparts of the mold, and the ability to monitor rotating molds. In addition, wireless transmission and local data processing help reduce power consumption, allowing the battery to last more than 2 years.

It is meant that "link" means a link between two components. The connection can be direct, indirect, physical or non-physical. Connection can be synonymous with one or more of "coupling", "connection", "connection" or similar. The "moving part" and "fixed part" of the mold are the half of the mold that moves during the opening/closing cycle and the half that remains stationary, respectively. The term "wireless" refers to wireless communication, which takes place via radio waves rather than cables. "Data processing" refers to any operation or series of operations performed on the raw data acquired by sensors in order to extract useful information from it. The term "cloud" indicates a remote data storage and processing system accessible via the internet. An "interface" refers to a connection point between two systems or components that enables the exchange of information.

The invention thus conceived and illustrated here is susceptible to numerous modifications and variations, all falling within the scope of the inventive concept. In addition, all the details can be replaced by other technically equivalent elements. Finally, the components used, as long as they are compatible with the specific use, as well as the dimensions, can be any according to the needs and the state of the art.

Where the characteristics and techniques mentioned in any claim are followed by reference signs, those reference signs have been included for the sole purpose of increasing the intelligibility of the claims and, consequently, those reference signs have no limiting effect on the interpretation of each element identified by way of example by those reference signs.

## Claims

1. Detection apparatus for molds, including:
- at least one process sensor (3) configured to acquire data from a mold;
- at least one transducer (5) connected to the process sensor (3), configured to:
∘ receive data from the process sensor (3),
∘ process data to extract parameters,
∘ wirelessly transmit the extracted parameters;
- a remote control and management unit (12) configured to receive the parameters transmitted wirelessly.

2. Apparatus according to claim 1, also including a gateway device (2) configured to receive the parameters extracted from the wireless transducer (5) and transmit them to the remote control and management unit (12).

3. Apparatus according to claim 2, where the gateway device (2) includes a PAN interface (11) to communicate with the wireless transducer (5) and an LPWAN interface (10) to communicate with the remote control and management unit (12).

4. Apparatus according to any of the foregoing claims, in which the wireless transducer (5) comprises a signal amplifier (6) and a logic unit (7) for data processing.

5. Apparatus according to any of the foregoing claims, where the process sensor (3) includes at least one of the following: pressure sensors, temperature sensors, flow sensors, and vibration sensors.

6. Apparatus according to any of the foregoing claims, where data processing includes the extraction of selected characteristics from the group comprising peak, rise time, hold time, and descent time for pressure or temperature data.

7. Mold **characterized by** the fact of understanding:
- a fixed part (1'),
- a moving part (1"),
- a detection apparatus according to one or more of the above claims.

8. Mold according to claim 7 **characterised by** the fact that at least transducer (5) is installed in the fixed (1') or mobile (1") part of the mold, while the gateway device (2) is installed in the other part (1",1'), and in which the gateway device receives the parameters extracted from the transducer wirelessly.

9. Mold according to claim 7 **characterised by** the fact that at least transducer (5) is installed in the fixed (1") or mobile (1") part of the mold, and the gateway device (2) is installed in the same part (1', 1"), and in which the gateway device receives the parameters extracted from the cable transducer.

10. Mold according to claim 7 **characterised by** the fact that at least transducer (5) is installed in the fixed (1") or mobile (1") part of the mold, and the gateway device (2) is installed in the same part (1', 1"), and in which the gateway device receives the parameters extracted from the transducer wirelessly.

11. Mold according to claim 7 **characterised by** the fact that at least transducer (5) is installed in the fixed (1") or mobile (1") part of the mold, and the gateway device (2) is installed in the same part (1', 1"), and in which the gateway device receives the parameters extracted from the transducer wirelessly.

12. Control infrastructure for a mold **characterized by** the fact that it includes:
- a detection apparatus according to one or more of claims 1 to 7,
- a mold 1
- a remote control and processing unit (12) connected to the gateway device (2) and/or transducer (5) wirelessly, and preferably via LPWAN.
